# EUROPEAN PATENT SPECIFICATION

(11) **EP 2 871 826 B1**
(45) Date of publication and mention of the grant of the patent: **30.09.2020**
(21) Application number: 13829760.1
(22) Date of filing: 15.08.2013
(51) Int. Cl.: G06F 3/0481, H04M 1/725

(54) **METHOD, DEVICE AND TERMINAL FOR ADJUSTING WIDGET**
VERFAHREN, VORRICHTUNG UND ENDGERÄT ZUR EINSTELLUNG VON WIDGETS
PROCÉDÉ, DISPOSITIF ET TERMINAL POUR RÉGLER UN GADGET LOGICIEL

(30) Priority: 15.08.2012 CN 201210291529
(43) Date of publication of application: 13.05.2015
(73) Proprietor: Xiaomi Inc., Beijing 100085 (CN)
(72) Inventor: LI, Weixing, Beijing 100085 (CN); XU, Fei, Beijing 100085 (CN); SUN, Daqing, Beijing 100085 (CN); WANG, Ying, Beijing 100085 (CN)
(74) Representative: Robson, Aidan John
(86) International application number: PCT/CN2013/081535
(87) International publication number: WO 2014/026623

(56) References cited:
- WO-A2-2010/035162
- CN-A- 101 800 793
- CN-A- 102 073 650
- CN-A- 102 811 290
- Google Developers: "App Widget Design Guidelines | Android Developers", , 11 July 2012 (2012-07-11), XP055520734, Retrieved from the Internet: URL:tool.oschina.net/uploads/apidocs/andro id/guide/practices/ui_guidelines/widget_de sign.html [retrieved on 2018-11-02]

## Description

### TECHNICAL FIELD

The present disclosure relates to a communication technology, and more particularly to a method, apparatus and terminal for adjusting a widget.

### BACKGROUND

At present, mobile phone is quite popular, and applications applied in the mobile phones become more plentiful. In order to more conveniently use functions in a mobile phone, widgets may be inserted into a mobile phone interface. For example, a clock widget may display the current time on the mobile phone interface. A weather widget may display the current weather on the mobile phone interface.

Grid configuration is used on the mobile phone interface, and thus icons, widgets and the like on the interface are aligned according to grids, so that the contents displayed on the whole interface is aligned in order.

However, currently, the number of grids occupied by a widget is constant, and cannot be dynamically calculated as the grid configuration is changed. Therefore, the display effect of the widget after performing the grid configuration becomes deteriorated.

PCT application WO 2010/035162 A2 describes a system and method for window resizing. A display having a plurality of viewing areas and a plurality of re-sizeable windows is described. Each window is displayed in an area corresponding to a number of the viewing areas, and one or more re-sizing icons are provided corresponding to each of the re-sizeable windows. A selection of one of the resizing icons resizes the window corresponding to the resizing icon to be displayed in a further area corresponding to a further number of the viewing areas. The size of the viewing areas do not change.

### SUMMARY

The present invention is defined by independent claims 1, 5 and 10 and is directed to a method, an apparatus and a terminal for adjusting a widget, which can change the number of grids occupied by the widget in the terminal, thereby improving the display effect.

The method for adjusting a widget on a terminal interface includes: acquiring a size value of the widget on the terminal interface after switching a grid configuration of the terminal interface from a first grid configuration to a second grid configuration having a unit grid size different to the first grid configuration; and determining the number of grid units occupied by the widget according to size values of respective grid in the second grid configuration, such that the size value of the widget is not changed or is adapted to the size values of respective grid in the second grid configuration after switching the grid configuration of the terminal interface from the first grid configuration to the second grid configuration.

The apparatus for adjusting a widget on a terminal interface includes an acquisition module configured to acquire a size value of the widget after switching a grid configuration of a terminal interface from a first grid configuration to a second grid configuration having a unit grid size different to the first grid configuration; and a determination module configured to determine the number of grid units occupied by the widget according to size values of respective grids in the second grid configuration, such that the size value of the widget is not changed or is adapted to the size values of respective grid in the second grid configuration after switching the grid configuration of the terminal interface from the first grid configuration to the second grid configuration.

A terminal includes the apparatus for adjusting a widget.

The embodiments of the present disclosure have the following advantages.

In the method, the apparatus and terminal for adjusting a widget and according to the embodiments of the present disclosure, a size value of the widget is acquired after a grid configuration of the terminal interface is changed from a first grid configuration to a second grid configuration, and the number of grid units occupied by the widget is determined according to size values of respective grids in the second grid configuration. Accordingly, the size of a widget is automatically converted into the number of grid units in the current grid configuration such that the size isn't changed or is adapted to the size of the current grid configuration after the grid configuration is changed, thereby improving display effect and user experience.

### BRIEF DESCRIPTION OF THE DRAWINGS

Fig. 1 is a flowchart showing a method for adjusting a widget according to the present disclosure.
Fig.2 is a flowchart showing a process for adjusting a widget according to the present disclosure.
Fig.3a and Fig.3b are diagrams showing grids of a terminal interface according to the present disclosure.
Fig.4a is a diagram showing displayed grids attribute of the widget in a first grid configuration according to the present disclosure.
Fig.4b is a diagram showing displayed grids attribute of the widget in a second grid configuration according to the present disclosure.
Fig.5a is a diagram showing the number of grids occupied by an album widget in a 4^{∗}4 grid configuration.
Fig.5b is a diagram showing the number of grids occupied by an album widget in a 2^{∗}2 grid configuration according to the present disclosure.
Fig.5c is a diagram showing the number of grids occupied by an album widget in a 3^{∗}3 grid configuration according to the present disclosure.
Fig.5d is another diagram showing the number of grids occupied by the album widget in the 3^{∗}3 grid configuration according to the present disclosure.
Fig.5e is a yet diagram showing the number of grids occupied by the album widget in the 3^{∗}3 grid configuration according to the present disclosure.
Fig.6 is a block diagram of an apparatus for adjusting a widget according to the present disclosure.

### DETAILED DESCRIPTION

With reference to the appended drawings, a method and an apparatus for adjusting a widget and a terminal according to the present disclosure will be described in detail.

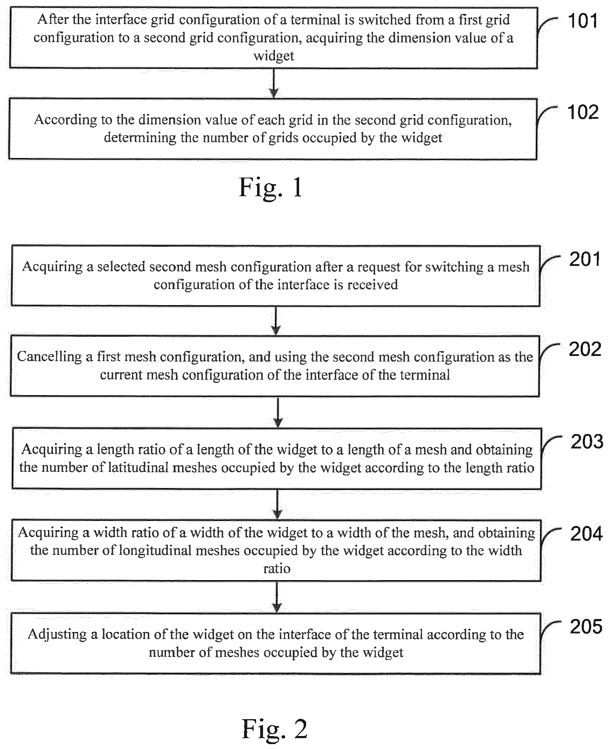

A method for adjusting a widget according to the present disclosure may include the following steps, as shown in Fig.1.

At step 101, a size value of a widget on a terminal interface is acquired after a grid configuration of the terminal interface is switched from a first grid configuration to a second grid configuration.

For example, a selected second grid configuration is acquired after a request for switching a grid configuration of an interface is received, and the first grid configuration is removed and the second grid configuration serves as a current grid configuration of the terminal interface.

At step 102, the number of grids occupied by the widget is determined according to size values of respective grids in the second grid configuration.

For example, a length ratio of a length of the widget to a length of a grid is acquired; the number of latitudinal grids occupied by the widget is acquired according to the length ratio; a width ratio of a width of the widget to a width of the grid; and the number of longitudinal grids occupied by the widget is acquired according to the width ratio.

Optionally, if the widget is located on a terminal interface, the widget's position on the terminal interface is on is adjusted according to the number of grids occupied by the widget. If the widget is not located on the terminal interface, the displayed grid attribute of the widget is adjusted according to the number of grids occupied by the widget.

Optionally, if the number of grids occupied by the widget is an integer, the widget is aligned according to grids. If the number of grids occupied by the widget is not an integer, the widget is centrally aligned in its externally-connected grids, or the widget is aligned according to grids after the length and/or a width of the widget is stretched or contracted to be an integer.

According to the above described contents, in the method for adjusting a widget according to the present disclosure, the size of a widget can be automatically converted into the number of grids in the current grid configuration such that the size of a widget is not changed or is adapted to the size of the current unit grid, and thus the display effect may be improved and the user experience may be improved.

The method according to the present disclosure will be described, and as shown in Fig.2, the method includes the following steps.

At step 201, a selected second grid configuration is acquired after a request for switching a grid configuration of an interface is received.

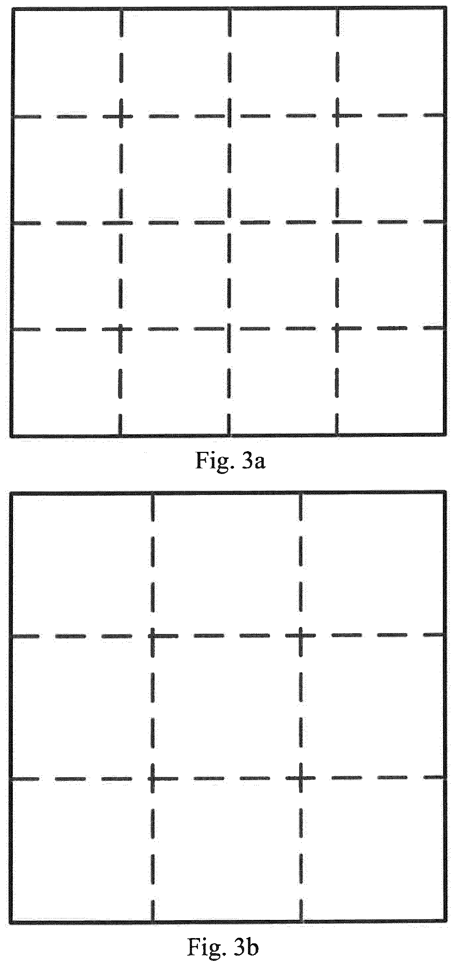

The grid segmentation of a terminal interface may be changed through a grid configuration set in a system or changing a size of font in the terminal. The grids of the terminal interface may be aligned in advance. A 4^{∗}4 grid configuration is shown in Fig.3a, the terminal interface may be equally divided into 4^{∗}4 rectangles. A 3^{∗}3 grid configuration is shown in Fig.3b, the terminal interface may be equally divided into 3^{∗}3 rectangles. Herein, the solid line indicates edges of the screen and the dotted line indicates grids. In the 3^{∗}3 grid configuration, the size of font displayed in the terminal interface is larger and the icon in the interface is larger.

When it is required for a user to switch a grid configuration of an interface, for example, from a first grid configuration to a second grid configuration, the second grid configuration configured in advance is acquired.

At step 202, the first grid configuration is removed and the second grid configuration serves as the current grid configuration of the terminal interface.

At step 203, a length ratio of a length of the widget to a length of a grid is acquired, and the number of latitudinal grids occupied by the widget is acquired according to the length ratio.

At step 204, a width ratio of a width of the widget to a width of the grid is acquired and the number of longitudinal grids occupied by the widget is acquired according to the width ratio.

For example, assume that the length of the widget is *A* and the width thereof is *B,* and the length of the grid is *a* and the width thereof is *b,* the length ratio is *A*/*a*, and the width ratio is *B*/*b.*

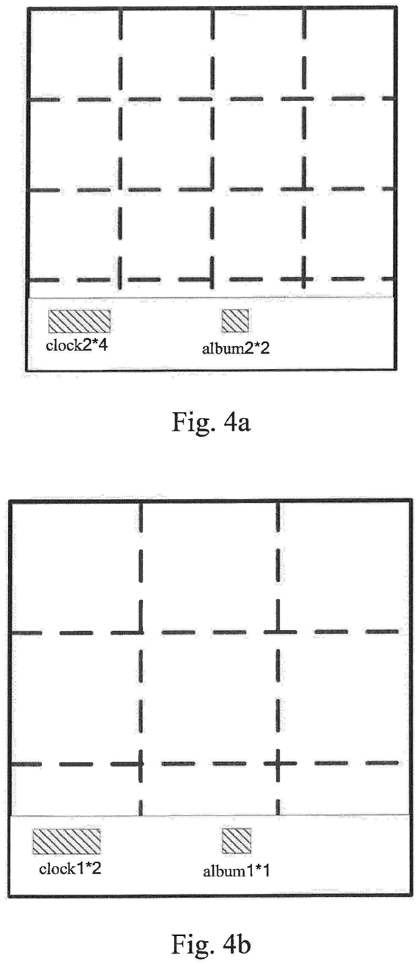

At step 205, a widget's location on a terminal interface is adjusted according to the number of grids occupied by the widget. If the widget is located on the terminal interface, the widget's location on the terminal interface is adjusted according to the number of grids occupied by the widget. If the widget isn't located on the terminal interface, the displayed grid attribute of the widget is adjusted according to the number of grids occupied by the widget. Fig.4a shows the displayed grid attribute of respective widgets when the grid configuration is 4^{∗}4. Fig.4b shows the displayed grid attribute of respective widgets when the grid configuration is 3^{∗}3. Therefore, if the grid configuration is changed, the number of grids occupied by the respective widgets is correspondingly changed.

Hereafter, the adjusting of the widget's location on the terminal interface according to the number of grids occupied by the widget will be described in detail in several following situations.

A first situation: if the number of grids occupied by a widget is an integer, the widget is aligned according to grids.

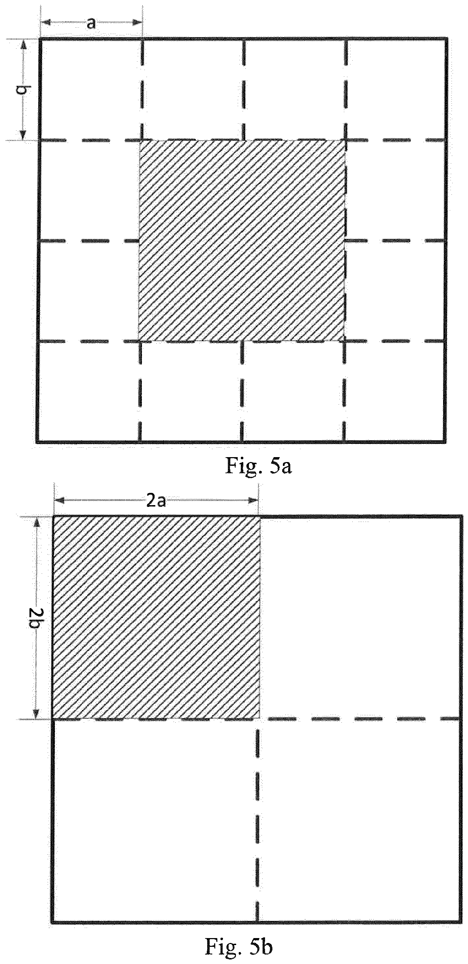

Taking an example of converting a grid configuration of a terminal interface from a 4^{∗}4 grid configuration to a 2^{∗}2 grid configuration, assume that a length of each grid is *a* in the 4^{∗}4 grid configuration and a width of each grid is *b,* a length of each grid in the 4^{∗}4 grid configuration is *2a* and a width thereof is *2*b. A length of an album widget is *2a* and the width thereof is *2b,* the number of grids occupied by the widget is 2^{∗}2 in a 4^{∗}4 grid configuration, as shown in Fig.5a. When the grid configuration of the terminal interface is converted from the 4^{∗}4 grid configuration to the 2^{∗}2 grid configuration, the number of latitudinal grids occupied by the album widget is *2a*/*2a*=1, and the number of longitudinal grids occupied by the album widget is *2b*/*2b*=1. Accordingly, as shown in Fig.5b, the widget is aligned in grids.

A second situation: If the number of grids occupied by the widget isn't an integer, the widget is centrally aligned in its externally-connected grids.

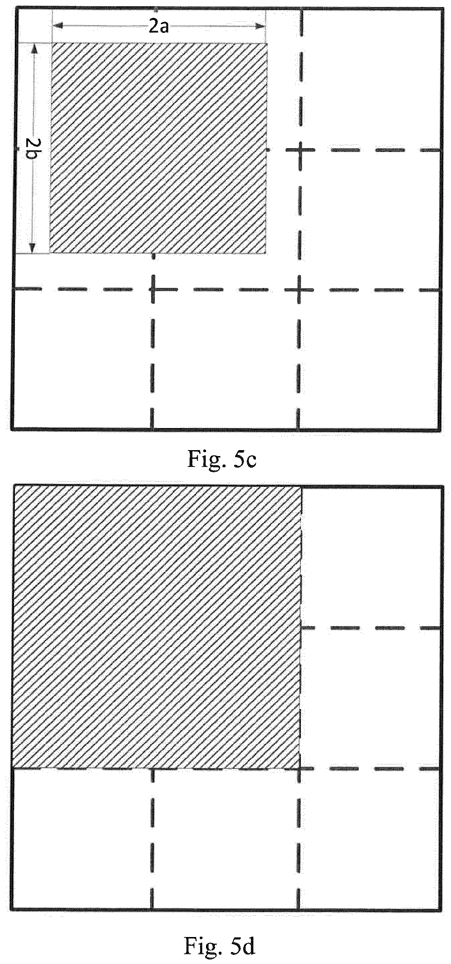

Taking an example of converting a grid configuration of a terminal interface from a 4^{∗}4 grid configuration to a 3^{∗}3 grid configuration, assume that a length of each grid is *a* in the 4^{∗}4 grid configuration and a width of each grid is *b,* a length of each grid is c in the 4^{∗}4 grid configuration and a width of each grid is *d,* wherein *c*=*4a*/*3* and *d*=*4b*/*3.* A length of an album widget is *2a* and the width thereof is *2b,* the number of grids occupied by the widget is 2^{∗}2 in the 4^{∗}4 grid configuration, as shown in Fig.5a. When the grid configuration of the terminal interface is converted from the 4^{∗}4 grid configuration to the 3^{∗}3 grid configuration, the number of latitudinal grids occupied by the album widget is *2a*/*c*=*1.5*, and the number of longitudinal grids occupied by the album widget is *2b*/*d*=*1.5.* Because the size of the album widget is not integer multiple of the unit grid, as shown in Fig. 5c, the widget is centrally aligned in its externally-connected grids in order to have a beautiful effect. Herein, the externally-connected grids refer to the grids constituted by the grid lines closest to the widget.

A third situation: if the number of grids occupied by the widget isn't an integer, the widget is aligned according to grids after the length or the width of the widget is stretched to be an integer.

On basis of the above second situation, i.e., the number of latitudinal grids occupied by the widget is *2a*/*c*=*1.5* and the number of longitudinal grids occupied by the widget is *2b*/*d*=*1.5*, the length of the widget is stretched from *2a* to *2c,* and the width of the widget is stretched from *2b* to *2d.* As a result, the number of widget occupied by the album widget is 2^{∗}2. Then, the widget is aligned according to grids and the arrangement effect is shown in Fig.5d.

A fourth situation: if the number of grids occupied by the widget isn't an integer, the widget is aligned according to grids after the length or the width of the widget is contracted to be an integer.

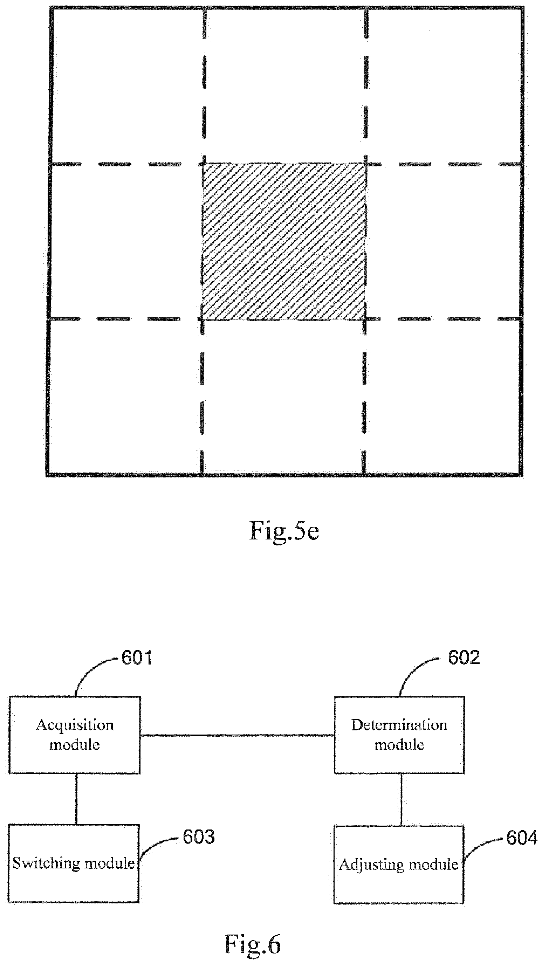

On basis of the above second situation, i.e., the number of latitudinal grids occupied by the widget is *2a*/*c*=*1.5* and the number of longitudinal grids occupied by the widget is *2b*/*d*=*1.5,* the length of the widget is contracted from *2a* to *c*, and the width of the widget is contracted from *2b* to *d.* As a result, the number of widget occupied by the album widget is 1^{∗}1. Then, the widget is aligned according to grids and the arrangement effect is shown in Fig.5e.

It can be seen from the above described contents that in the method for adjusting a widget according to the embodiment of the present disclosure, the size of the widget can be automatically converted into the number of grids in the current grid configuration such that the size of a widget isn't changed or is adapted to the size of the current unit grid, and thus the display effect may be improved and the user experience may be improved.

Based on the identical inventive concept, the embodiments of the present disclosure further provide an apparatus and a terminal for adjusting a widget. Since the principle for solving the problems by the apparatus and the terminal is similar to the above method for adjusting a widget, the implement of the apparatus and the terminal may refer to the implement of the method, description of which will be not repeated herein.

An apparatus for adjusting a widget according to an embodiment of the present disclosure includes the following modules, as shown in Fig.6.

An acquisition module 601 is configured to acquire a size value of the widget on a terminal interface after a grid configuration of the terminal interface is switched from a first grid configuration to a second grid configuration;.

A determination module 602 is configured to determine the number of grids occupied by the widget according to size values of respective grids in the second grid configuration.

Optionally, the apparatus further includes a switching module 603 configured to acquire a selected second grid configuration after a request for switching a grid configuration of the terminal interface is received, configured to remove a first grid configuration, and configured to adopt the second grid configuration as the current grid configuration of the terminal interface.

Optionally, the determination module 602 is configured to acquire a length ratio of a length of the widget to a length of a grid; to obtain the number of latitudinal grids occupied by the widget according to the length ratio; to acquire a width ratio of a width of the widget to a width of the grid and to obtain the number of longitudinal grids occupied by the widget according to the width ratio.

Optionally, the apparatus further includes an adjusting module 604 configured to adjust the widget's location on the terminal interface according to the number of grids occupied by the widget if the widget is located on the terminal interface, and to adjust the displayed grid attribute of the widget according to the number of grids occupied by the widget if the widget isn't located on the terminal interface.

Optionally, the adjusting module 604 is configured to align the widget according to grids if the number of grids occupied by the widget is an integer; and to align the widget in its external-connected grids if the number of grids occupied by the widget isn't an integer, or to align the widget according to grids after the length or the width of the widget is stretched or contracted to be an integer.

The present disclosure further provides a terminal including the above apparatus. The terminal may be various terminals in which a widget may operate, such as a phone, a tablet, an ipad and so on.

Through the above description of the above implementations, it should be understood by those skilled in the art, that the implementations of this disclosure may be implemented by hardware as well as software in combination with the necessary general hardware platform. Based on this understanding, the technical solution of the implementations of this disclosure can be manifested in the form of a software product which may be stored in a non-volatile storage medium (for example, a CD-ROM, U disk, hard disk, etc.) and includes several instructions to enable a computer device (for example, a personal computer, a server, or a network device, etc.) to execute the method according to the present disclosure.

It should be understood by those skilled in the art, that the appended drawings are only a schematic diagram of a preferred embodiment, the modules or processes in the appended drawings are not necessarily required by the implementation of the present disclosure.

It should be understood by those skilled in the art, that the modules in the apparatus may be distributed in the apparatus according to the above description, and may be also distributed in an apparatus or several apparatuses. The modules can be combined into one module and may be further divided into several sub modules.

The method and the apparatus for adjusting a widget and the terminal can automatically convert the size of the widget into the number of grids in the current grid configuration such that the size of a widget isn't changed or is adapted to the size of the current unit grid, whereby the display effect may be improved and the user experience may be improved.

Apparently, those skilled in the art may make various modifications and variations to the disclosure without departing the spirit and scope of the disclosure. Thus, the disclosure intends to include these modifications and variations if they belong to the scope of the claims of the disclosure and the equivalent technology thereof.

## Claims

1. A method for adjusting a widget on a terminal interface of a terminal device, the method comprises:
acquiring (101), by an acquisition module (602) of the terminal device, a size value of the widget on the terminal interface after switching a grid configuration of the terminal interface from a first grid configuration to a second grid configuration having a unit grid size different to the first grid configuration;
determining (102), by a determination module (603) of the terminal device, the number of grid units occupied by the widget according to size values of respective grids in the second grid configuration, such that the size value of the widget is not changed or is adapted to the size values of respective grids in the second grid configuration after switching the grid configuration of the terminal interface from the first grid configuration to the second grid configuration;
adjusting (205), by an adjusting module (604) of the terminal device, the widget's location on the terminal interface according to the number of grid units occupied by the widget if the widget is located on the terminal interface, and
adjusting, by the adjusting module (604), a displayed grid attribute of the widget according to the number of grid units occupied by the widget if the widget is not located on the terminal interface.

2. The method according to claim 1, the switching a grid configuration of the terminal interface from a first grid configuration to a second grid configuration comprises:
acquiring (201) a selected second grid configuration after a request for switching a grid configuration of the interface is received; and
removing (202) the first grid configuration; and
adopting the second grid configuration as the current grid configuration of the terminal interface.

3. The method according to claim 1, the determining the number of grids occupied by the widget according to size values of respective grids in the second grid configuration comprises:
acquiring (203) a length ratio of a length of the widget to a length of a grid; and
obtaining the number of latitudinal grid units occupied by the widget according to the length ratio;
and
acquiring (204) a width ratio of a width of the widget to a width of the grid;
obtaining the number of longitudinal grid units occupied by the widget according to the width ratio.

4. The method according to claim 1 or 3, the adjusting the widget's location on the terminal interface according to the number of grid units occupied by the widget comprises:
aligning the widget according to grids if the number of grids occupied by the widget is an integer, and
aligning the widget in its external-connected grids if the number of grid units occupied by the widget isn't an integer; or
aligning the widget according to grids after the length or the width of the widget is stretched or contracted to be an integer, if the number of grids occupied by the widget isn't an integer.

5. An apparatus for adjusting a widget on a terminal interface, the apparatus comprises:
an acquisition module (602) configured to acquire a size value of the widget on the terminal interface after a grid configuration of the terminal interface is switched from a first grid configuration to a second grid configuration having a unit grid size different to the first grid configuration;
a determination module (603) configured to determine the number of grid units occupied by the widget according to size values of respective grid in the second grid configuration, such that the size value of the widget is not changed or is adapted to the size values of respective grid in the second grid configuration after the grid configuration of the terminal interface is switched from the first grid configuration to the second grid configuration;
an adjusting module (604) configured to adjust the widget's location on the terminal interface according to the number of grid units occupied by the widget if the widget is located on the terminal interface, and to adjust a displayed grid attribute of the widget according to the number of grids occupied by the widget if the widget isn't located on the terminal interface.

6. The apparatus according to claim 5, the apparatus further comprises:
a switching module (603) configured to acquire a selected second grid configuration after a request for switching a grid configuration of the terminal interface is received, configured to remove a first grid configuration, and configured to adopt the second grid configuration as the current grid configuration of the terminal interface.

7. The apparatus according to claim 5, the determination is configured to acquire a length ratio of a length of the widget to a length of a grid, and to obtain the number of latitudinal grid units occupied by the widget according to the length ratio; the determination is configured to acquire a width ratio of a width of the widget to a width of the grid, and to obtain the number of longitudinal grid units occupied by the widget according to the width ratio.

8. The apparatus according to claim 5 or 7, the adjusting module (604) is configured to align the widget according to grids if the number of grid units occupied by the widget is an integer, and
to align the widget in its external-connected grids, or align the widget according to grids after the length or width of the widget is stretched or contracted to be an integer, if the number of grid units occupied by the widget isn't an integer.

9. A terminal, **characterized in that**, the terminal comprises the apparatus of adjusting a widget according to any one of claims 5 to 8.

10. A computer program, which when executing on a processor of device, performs a method according to any one of claims 1 to 4.

## Patentansprüche

1. Verfahren zum Justieren eines Widget auf einer Endgeräteschnittstelle eines Endgeräts, wobei das Verfahren Folgendes beinhaltet:
Erfassen (101), durch ein Erfassungsmodul (602) des Endgeräts, eines Größenwertes des Widget auf der Endgeräteschnittstelle nach dem Umschalten einer Rasterkonfiguration der Endgeräteschnittstelle von einer ersten Rasterkonfiguration auf eine zweite Rasterkonfiguration mit einer Einheitsrastergröße, die sich von der ersten Rasterkonfiguration unterscheidet;
Bestimmen (102), durch ein Bestimmungsmodul (603) des Endgeräts, der Anzahl von von dem Widget belegten Rastereinheiten gemäß Größenwerten von jeweiligen Rastern in der zweiten Rasterkonfiguration, so dass der Größenwert des Widget nicht geändert oder nach dem Umschalten der Rasterkonfiguration der Endgeräteschnittstelle von der ersten Rasterkonfiguration auf die zweite Rasterkonfiguration an die Größenwerte von jeweiligen Rastern in der zweiten Rasterkonfiguration angepasst wird;
Anpassen (205), durch ein Anpassungsmodul (604) des Endgeräts, des Orts des Widget auf der Endgeräteschnittstelle gemäß der Anzahl von von dem Widget belegten Rastereinheiten, wenn sich das Widget auf der Endgeräteschnittstelle befindet, und
Anpassen, durch das Anpassungsmodul (604), eines angezeigten Rasterattributs des Widget gemäß der Anzahl von von dem Widget belegten Rastereinheiten, wenn sich das Widget nicht auf der Endgeräteschnittstelle befindet.

2. Verfahren nach Anspruch 1, wobei das Umschalten einer Rasterkonfiguration der Endgeräteschnittstelle von einer ersten Rasterkonfiguration auf eine zweite Rasterkonfiguration Folgendes beinhaltet:
Erfassen (201) einer gewählten zweiten Rasterkonfiguration nach dem Empfang einer Anforderung zum Umschalten einer Rasterkonfiguration der Schnittstelle; und
Entfernen (202) der ersten Rasterkonfiguration; und
Annehmen der zweiten Rasterkonfiguration als die aktuelle Rasterkonfiguration der Endgeräteschnittstelle.

3. Verfahren nach Anspruch 1, wobei das Bestimmen der Anzahl von von dem Widget belegten Rastern gemäß Größenwerten von jeweiligen Rastern in der zweiten Rasterkonfiguration Folgendes beinhaltet:
Erfassen (203) eines Längenverhältnisses zwischen einer Länge des Widget und einer Länge eines Rasters; und
Einholen der Anzahl von von dem Widget belegten latitudinalen Rastereinheiten gemäß dem Längenverhältnis; und
Erfassen (204) eines Breitenverhältnisses zwischen einer Breite des Widget und einer Breite des Rasters;
Einholen der Anzahl von von dem Widget belegten longitudinalen Rastereinheiten gemäß dem Breitenverhältnis.

4. Verfahren nach Anspruch 1 oder 3, wobei das Anpassen des Orts des Widget auf der Endgeräteschnittstelle gemäß der Anzahl von von dem Widget belegten Rastereinheiten Folgendes beinhaltet:
Ausrichten des Widget gemäß Rastern, wenn die Anzahl von von dem Widget belegten Rastern eine ganze Zahl ist, und
Ausrichten des Widget in seinen extern verbundenen Rastern, wenn die Anzahl von von dem Widget belegten Rastereinheiten keine ganze Zahl ist; oder
Ausrichten des Widget gemäß Rastern, nachdem die Länge oder die Breite des Widget auf eine ganze Zahl gedehnt oder zusammengezogen wurde, wenn die Anzahl von von dem Widget belegten Rastern keine ganze Zahl ist.

5. Vorrichtung zum Anpassen eines Widget an eine Endgeräteschnittstelle, wobei die Vorrichtung Folgendes umfasst:
ein Erfassungsmodul (602), konfiguriert zum Erfassen eines Größenwertes des Widget auf der Endgeräteschnittstelle nach dem Umschalten einer Rasterkonfiguration der Endgeräteschnittstelle von einer ersten Rasterkonfiguration auf eine zweite Rasterkonfiguration mit einer Einheitsrastergröße, die sich von der ersten Rasterkonfiguration unterscheidet;
Bestimmungsmodul (603), konfiguriert zum Bestimmen der Anzahl von von dem Widget belegten Rastereinheiten gemäß Größenwerten eines jeweiligen Rasters in der zweiten Rasterkonfiguration, so dass der Größenwert des Widget nicht geändert oder nach dem Umschalten der Rasterkonfiguration der Endgeräteschnittstelle von der ersten Rasterkonfiguration auf die zweite Rasterkonfiguration an die Größenwerte von jeweiligen Rastern in der zweiten Rasterkonfiguration angepasst wird;
ein Anpassungsmodul (604), konfiguriert zum Anpassen des Orts des Widget auf der Endgeräteschnittstelle gemäß der Anzahl von von dem Widget belegten Rastereinheiten, wenn sich das Widget auf der Endgeräteschnittstelle befindet, und zum Anpassen eines angezeigten Rasterattributs des Widget gemäß der Anzahl von von dem Widget belegten Rastern, wenn sich das Widget nicht auf der Endgeräteschnittstelle befindet.

6. Vorrichtung nach Anspruch 5, wobei die Vorrichtung ferner Folgendes umfasst:
ein Umschaltmodul (603), konfiguriert zum Erfassen einer gewählten zweiten Rasterkonfiguration nach dem Empfang einer Anforderung zum Umschalten einer Rasterkonfiguration der Endgeräteschnittstelle, konfiguriert zum Entfernen einer ersten Rasterkonfiguration und konfiguriert zum Annehmen der zweiten Rasterkonfiguration als die aktuelle Rasterkonfiguration der Endgeräteschnittstelle.

7. Vorrichtung nach Anspruch 5, wobei das Bestimmen zum Erfassen eines Längenverhältnisses zwischen einer Länge des Widget und einer Länge eines Rasters und zum Einholen der Anzahl von von dem Widget belegten latitudinalen Rastereinheiten gemäß dem Längenverhältnis konfiguriert ist; wobei das Bestimmen zum Erfassen eines Breitenverhältnisses zwischen einer Breite des Widget und einer Breite des Rasters und zum Einholen der Anzahl von von dem Widget belegten longitudinalen Rastereinheiten gemäß dem Breitenverhältnis konfiguriert ist.

8. Vorrichtung nach Anspruch 5 oder 7, wobei das Anpassungsmodul (604) konfiguriert ist zum Ausrichten des Widget gemäß Rastern, wenn die Anzahl von von dem Widget belegten Rastereinheiten eine ganze Zahl ist, und
zum Ausrichten des Widget in seinen extern verbundenen Rastern, oder zum Ausrichten des Widget gemäß Rastern, nachdem die Länge oder Breite des Widget auf eine ganze Zahl gedehnt oder zusammengezogen wurde, wenn die Anzahl von von dem Widget belegten Rastereinheiten keine ganze Zahl ist.

9. Endgerät, **dadurch gekennzeichnet, dass** das Endgerät die Vorrichtung zum Anpassen eines Widget nach einem der Ansprüche 5 bis 8 umfasst.

10. Computerprogramm, das bei Ausführung auf einem Prozessor eines Geräts ein Verfahren nach einem der Ansprüche 1 bis 4 durchführt.

## Revendications

1. Procédé de réglage d'un gadget logiciel sur une interface de terminal d'un terminal, le procédé comprenant :
l'acquisition (101), par un module d'acquisition (602) du terminal, d'une valeur de dimension du gadget sur l'interface de terminal après la permutation d'une configuration de grille de l'interface de terminal d'une première configuration de grille sur une seconde configuration de grille ayant une dimension de grille unitaire différente de celle de la configuration de grille ;
la détermination (102), par un module de détermination (603) du terminal, du nombre d'unités de grille occupées par le gadget logiciel conformément à des valeurs de dimension de grilles respectives dans la seconde configuration de grille, de telle sorte que la valeur de dimension du gadget logiciel ne change pas ou soit adaptée aux valeurs de dimension de grilles respectives dans la seconde configuration de grille après la permutation de la configuration de grille de l'interface de terminal de la première configuration de grille sur la seconde configuration de grille ;
le réglage (205), par un module de réglage (604) du terminal, de l'emplacement du gadget logiciel sur l'interface de terminal conformément au nombre d'unités de grille occupées par le gadget logiciel si le gadget logiciel se trouve sur l'interface de terminal, et
le réglage, par le module de réglage (604), d'un attribut de grille affiché du gadget logiciel conformément au nombre d'unités de grille occupées par le gadget logiciel si le gadget ne se trouve pas sur l'interface de terminal.

2. Procédé selon la revendication 1, la permutation d'une configuration de grille de l'interface de terminal d'une première configuration de grille sur une seconde configuration de grille comprend :
l'acquisition (201) d'une seconde configuration de grille sélectionnée après la réception d'une demande de commutation d'une configuration de grille de l'interface ; et
l'élimination (202) de la première configuration de grille ; et
l'adoption de la seconde configuration de grille comme configuration de grille courante de l'interface de terminal.

3. Procédé selon la revendication 1, la détermination du nombre de grilles occupées par le gadget logiciel conformément à des valeurs de dimension de grilles respectives dans la seconde configuration de grille comprend :
l'acquisition (203) d'un rapport de longueur d'une longueur du gadget logiciel sur une longueur d'une grille ; et
l'obtention du nombre d'unités de grille latitudinales occupées par le gadget logiciel conformément au rapport de longueur ;
et
l'acquisition (204) d'un rapport de largeur d'une largeur du gadget logiciel sur une largeur de la grille ;
l'obtention du nombre d'unités de grille longitudinales occupées par le gadget logiciel conformément au rapport de largeur.

4. Procédé selon la revendication 1 ou 3, le réglage de l'emplacement du gadget logiciel sur l'interface de terminal conformément au nombre d'unités de grille occupées par le gadget logiciel comprend :
l'alignement du gadget logiciel conformément à des grilles si le nombre de grilles occupées par le gadget logiciel est un nombre entier, et
l'alignement du gadget logiciel dans ses grilles connectées en externe si le nombre d'unités de grille occupées par le gadget logiciel n'est pas un nombre entier ; ou
l'alignement du gadget logiciel conformément à des grilles après que la longueur ou la largeur du gadget logiciel est étirée ou contractée en un nombre entier, si le nombre de grilles occupées par le gadget logiciel n'est pas un nombre entier.

5. Appareil de réglage d'un gadget logiciel sur une interface de terminal, l'appareil comprenant :
un module d'acquisition (602) configuré pour acquérir une valeur de dimension du gadget logiciel sur l'interface de terminal après la permutation d'une configuration de grille de l'interface de terminal d'une première configuration de grille sur une seconde configuration de grille ayant une taille de grille unitaire différente de celle de la première configuration de grille ;
un module de détermination (603) configuré pour déterminer le nombre d'unités de grille occupées par le gadget logiciel conformément à des valeurs de dimension de grille respective dans la seconde configuration de grille, de telle sorte que la valeur de dimension du gadget logiciel ne soit pas changée ou soit adaptée aux valeurs de dimension de grille respective dans la seconde configuration de grille après la commutation de la configuration de grille de l'interface de terminal de la première configuration de grille sur la seconde configuration de grille ;
un module de réglage (604) configuré pour régler l'emplacement du gadget logiciel sur l'interface de terminal conformément au nombre d'unités de grille occupées par le gadget logiciel si le gadget logiciel se trouve sur l'interface de terminal, et régler un attribut de grille affiché du gadget logiciel conformément au nombre de grilles occupées par le gadget logiciel si le gadget logiciel ne se trouve par sur l'interface de terminal.

6. Appareil conformément à la revendication 5, l'appareil comprenant en outre :
un module de permutation (603) configuré pour acquérir une seconde configuration de grille après la réception d'une demande de permutation d'une configuration de grille de l'interface de terminal, configuré pour éliminer une première configuration de grille, et configuré pour adopter la seconde configuration de grille comme configuration de grille courante de l'interface de terminal.

7. Appareil conformément à la revendication 5, la détermination est configurée pour acquérir un rapport de longueur d'une longueur du gadget logiciel sur une longueur d'une grille, et pour obtenir le nombre d'unités de grille latitudinales occupées par le gadget logiciel conformément au rapport de longueur ; la détermination est configurée pour acquérir un rapport de largeur d'une largeur du gadget logiciel sur une largeur de la grille, et pour obtenir le nombre d'unités de grille longitudinales occupées par le gadget logiciel conformément au rapport de largeur.

8. Appareil conformément à la revendication 5 ou 7, le module de réglage (604) est configuré pour aligner le gadget logiciel conformément à des grilles si le nombre d'unités de grille occupées par le gadget logiciel est un nombre entier, et
aligner le gadget logiciel dans ses grilles connectées en externe, ou aligner le gadget logiciel conformément à des grilles après que la longueur ou la largeur du gadget logiciel est étirée ou contractée en un nombre entier, si le nombre d'unités de grille occupées par le gadget logiciel n'est pas un nombre entier.

9. Terminal, **caractérisé en ce que** le terminal comprend l'appareil de réglage d'un gadget logiciel conformément à l'une quelconque des revendications 5 à 8.

10. Programme informatique qui, à son exécution sur un processeur de dispositif, réalise un procédé conformément à l'une quelconque des revendications 1 à 4.
